# EUROPÄISCHE PATENTSCHRIFT

(11) **EP 2 512 879 B1**
(45) Veröffentlichungstag und Bekanntmachung des Hinweises auf die Patenterteilung: **18.09.2013**
(21) Anmeldenummer: 10776966.3
(22) Anmeldetag: 26.10.2010
(51) Int. Cl.: B60S 1/04

(54) **SCHEIBENWISCHVORRICHTUNG**
WINDSCREEN WIPER DEVICE
DISPOSITIF D'ESSUIE-GLACE

(30) Priorität: 17.12.2009 DE 102009054830
(43) Veröffentlichungstag der Anmeldung: 24.10.2012
(73) Patentinhaber: Robert Bosch GmbH, 70442 Stuttgart (DE)
(72) Erfinder: RAPP, Juergen, 77886 Lauf (DE)
(86) Internationale Anmeldenummer: PCT/EP2010/066100
(87) Internationale Veröffentlichungsnummer: WO 2011/072928

(56) Entgegenhaltungen:
- DE-A1- 19 903 140
- FR-A1- 2 863 990

## Beschreibung

### Stand der Technik

Übliche Scheibenwischvorrichtungen, wie sie in Kraftfahrzeugen verwendet werden, umfassen Wischerarme, die oszillierend in einem Kreissegment um eine Wischerwelle bewegt werden. Die Wischerwelle und ein rohrförmiges Lager zur Aufnahme der Wischerwelle erstrecken sich dabei in einer im Wesentlichen senkrecht zu einer Oberfläche einer Sichtscheibe des Kraftfahrzeugs verlaufenden Richtung. Im Fall eines Zusammenpralls des Kraftfahrzeugs mit einer Person außerhalb des Kraftfahrzeugs besteht daher die Gefahr, dass die Person, beispielsweise mit dem Kopf, axial auf die Wischerwelle auf das Lager aufschlägt und schwere Verletzungen erleidet.

Es ist Aufgabe der Erfindung, eine Scheibenwischvorrichtung für ein Kraftfahrzeug anzugeben, die ein Verletzungsrisiko einer auf das Kraftfahrzeug aufprallenden Person durch die Scheibenwischvorrichtung minimiert.

EP 1 939 055 A2 zeigt eine Scheibenwischvorrichtung mit einem Antrieb und zwei Wischerwellenlagern, die mittels Platinenrohren an dem Antrieb fixiert sind.

DE 199 03 140 A1 zeigt eine Wischeranlage mit einer Wischerwelle, die unter axialer Belastung in eine Fahrzeugkarosserie verschiebbar ist.

### Offenbarung der Erfindung

Die Erfindung löst dieses Problem mit einer Scheibenwischvorrichtung mit den Merkmalen des Anspruchs 1. Unteransprüche geben vorteilhafte Ausführungsformen an.

Erfindungsgemäß weist eine Scheibenwischvorrichtung für ein Kraftfahrzeug ein Wischerwellenlager zur Lagerung einer Wischerwelle auf, wobei das Wischerwellenlager einen ersten axialen Abschnitt und einen zweiten, mit dem ersten kraftschlüssig verbundenen axialen Abschnitt aufweist und der erste axiale Abschnitt dazu eingerichtet ist, teleskopisch in den zweiten axialen Abschnitt eingeschoben zu werden.

Vorteilhafterweise kann bei einem Aufprall einer Person auf die Scheibenwischvorrichtung der erste Abschnitt nur geringe axiale Kräfte auf die Person ausüben, so dass ein Verletzungsrisiko der Person durch die Scheibenwischvorrichtung minimiert ist. Weiter vorteilhafterweise kann das Wischerwellenlager derart dimensioniert sein, dass sich die Wischerwelle vor dem Aufprall in einer optimierten Position zum Anlenken von Wischerblättern befindet, und während bzw. nach dem Aufprall eine Position einnimmt, die das Verletzungsrisiko der Person minimiert.

In einem Bereich zwischen dem ersten und dem zweiten axialen Abschnitt des Wischerwellenlagers ist ein Übergangsabschnitt mit einer Sollbruchstelle zur Trennung der kraftschlüssigen Verbindung zwischen den beiden axialen Abschnitten bei Überlastung vorgesehen. Durch die Sollbruchstelle kann vorteilhafterweise erreicht werden, dass nach einem aufprallbedingten Überwinden der Bruchkraft, die zum Lösen der Sollbruchstelle erforderlich ist, eine teleskopische Bewegung des ersten axialen Abschnitts in den zweiten axialen Abschnitt hinein nur noch vergleichsweise geringe Kräfte erfordert. Gleichzeitig wird bei intakter Sollbruchstelle vor dem Aufprall eine einfache, präzise und kostengünstige Übertragung von Kräften im Wischbetrieb der Scheibenwischvorrichtung ermöglicht.

Der erste axiale Abschnitt, der zweite axiale Abschnitt und der Übergangsabschnitt können stoffschlüssig und insbesondere einstückig miteinander verbunden sein. Dies erlaubt eine kostengünstige Herstellung des Wischerwellenlagers und insbesondere eine integrierte Ausformung der Sollbruchstelle mit definierter Bruchkraft zwischen dem ersten und dem zweiten axialen Abschnitt des Wischerwellenlagers.

Der erste axiale Abschnitt kann kreiszylindrische Form und der zweite axiale Abschnitt hohlzylindrische Form aufweisen. Dadurch kann beim teleskopischen Verschieben des ersten axialen Abschnitts in den zweiten axialen Abschnitt eine Gefahr eines Verkeilens der beiden axialen Abschnitte minimiert sein. Darüber hinaus kann die Sollbruchstelle kreisförmig ausgeformt sein, so dass eine axialsymmetrische Verteilung der Bruchkraft der Sollbruchstelle erzielt werden kann. Das Verletzungsrisiko der aufprallenden Person kann somit unabhängig von einer Aufprallrichtung der Person minimiert sein.

Ein Außendurchmesser des ersten axialen Abschnitts kann größer als ein Innendurchmesser des zweiten axialen Abschnitts sein. Dadurch kann der erste axiale Abschnitt nach dem Einschieben in den zweiten axialen Abschnitt auch eine gekippte Position einnehmen, so dass der erste axiale Abschnitt und die mit ihm verbundenen Teile von der aufprallenden Person in Kipprichtung verdrängt werden können, sodass das Verletzungsrisiko der Person weiter gesenkt sein kann.

Der zweite axiale Abschnitt kann ein Befestigungselement zur Befestigung des Wischerwellenlagers aufweisen. Insbesondere kann das Befestigungselement ein Steckelement zum Verbinden mit einem Platinenrohr der Scheibenwischvorrichtung umfassen. Somit lässt sich ein integriertes Wischerwellenlager für eine Scheibenwischvorrichtung auf einfache und kostengünstige Weise herstellen, wobei sich das Wischerwellenlager das sich äußerlich nicht oder nur wenig von einem bekannten Wischerwellenlager unterscheiden kann. Insbesondere kann das Wischerwellenlager dazu ausgebildet sein, als massenfertigungstaugliches Spritzguss-Bauteil hergestellt zu werden.

### Kurze Beschreibung der Zeichnungen

Im Folgenden wird die Erfindung mit Bezug auf die beigefügten Zeichnungen genauer beschrieben, in denen:
- Figur 1: eine Scheibenwischvorrichtung;
- Figur 2: das Wischerwellenlager der Scheibenwischvorrichtung aus Figur 1;
- Figur 3: einen Längsschnitt des Wischerwellenlagers aus Figuren 1 und 2; und
- Figur 4: ein Detail des Längsschnitts aus Figur 3
zeigen.

### Genaue Beschreibung von Ausführungsbeispielen

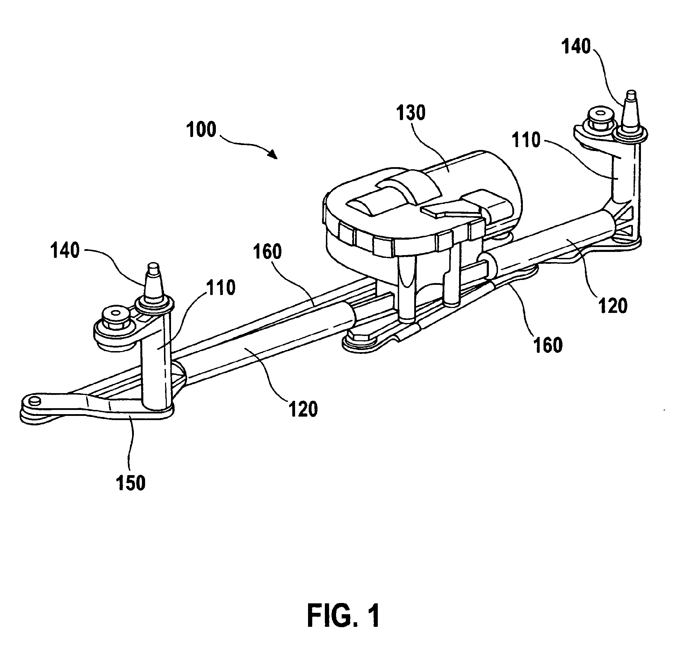

Figur 1 zeigt eine Scheibenwischvorrichtung 100 zum Einsatz in einem Kraftfahrzeug. Die Scheibenwischvorrichtung 100 umfasst zwei Wischerwellenlager 110, die auch Formrohre genannt werden, und zwei Platinenrohre 120, mittels derer die Wischerwellenlager 110 an einem Antrieb 130 der Scheibenwischvorrichtung 100 fixiert sind. Durch jedes der Wischerwellenlager 110 verläuft eine Wischerwelle 140, deren oberes Ende zur Befestigung eines Wischerarms mit Wischblatt (nicht gezeigt) eingerichtet ist. Am unteren Ende jeder Wischerwelle 140 ist eine Wischerkurbel 150 drehmomentschlüssig befestigt, die mittels einer Schubstange 160 vom Antrieb 130 angetrieben werden kann. In einer alternativen Ausführungsform kann die Wischerkurbel 150 auch am oberen Ende der Wischerwelle 140 angeordnet sein. In einer weiteren Ausführungsform umfasst die Scheibenwischvorrichtung 100 weniger oder mehr Wischerwellenlager 140, zum Beispiel eines oder drei.

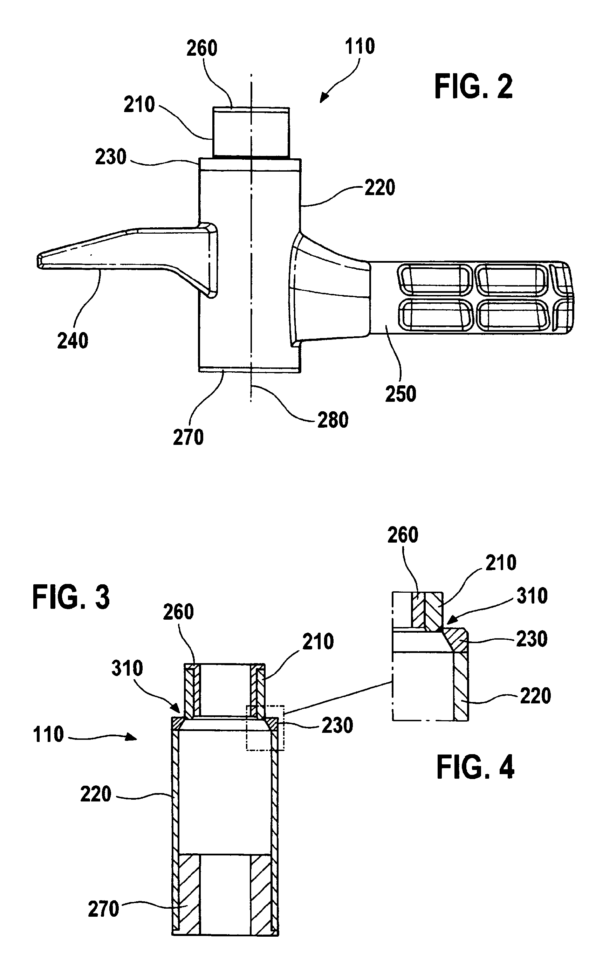

Figur 2 zeigt das Wischerwellenlager 110 der Scheibenwischvorrichtung 100 aus Figur 1 in einer seitlichen Ansicht. Das Wischerwellenlager 110 umfasst einen ersten axialen Abschnitt 210 und einen zweiten axialen Abschnitt 220, die mittels eines Übergangsabschnitts 230 kraftschlüssig miteinander verbunden sind. Eine Befestigungslasche 240 und ein Befestigungs-Steckelement 250 erstrecken sich in radialen Richtungen vom zweiten axialen Abschnitt 220. Die Befestigungslasche 240 ist zur Befestigung der Scheibenwischvorrichtung 100 beispielsweise an einer Karosserie eines Kraftfahrzeugs ausgebildet. Das Befestigungs-Steckelement 250 läuft zapfenförmig aus und ist zum Einschieben in das Platinenrohr 120 aus Figur 1 ausgebildet. Mehrere erkennbare Vertiefungen im Befestigungs-Steckelement 250 dienen der Gewichtsersparung.

An seinem oberen Ende trägt der erste axiale Abschnitt 210 eine obere Lagerbuchse 260; eine untere Lagerbuchse 270 ist am unteren Ende des zweiten axialen Abschnitts 220 angebracht. Die obere Lagerbuchse 260 und die untere Lagerbuchse 270 sind zum Lagern der Wischerwelle 140 aus Figur 1 um eine Drehachse 280 eingerichtet.

In einer bevorzugten Ausführungsform ist das Wischerwellenlager 110 mit Ausnahme der oberen Lagerbuchse 260 und der unteren Lagerbuchse 270 vollständig im Spritzgussverfahren hergestellt. Das Wischerwellenlager 110 kann aus Kunststoff gefertigt sein, dem beispielsweise Glasfasern zur Verstärkung beigemischt sein können.

Der Außendurchmesser des ersten axialen Abschnitts 210 des Wischerwellenlagers 110 ist derart gewählt, dass der erste axiale Abschnitt 210 in den hohlzylindrischen zweiten axialen Abschnitt 220 des Wischerwellenlagers 110 teleskopisch eingeschoben werden kann. Eine Höhe des ersten axialen Abschnitts 210 entlang der Drehachse 280 bestimmt dabei die Länge, um die das Wischerwellenlager 110 im Falle eines Aufpralls verkürzt werden kann.

Ist beispielsweise gefordert, dass zur Minimierung des Verletzungsrisikos ein axialer Abstand der Scheibenwischvorrichtung 100 aus Figur 1 zu einer darüber liegenden Motorhaube wenigstens 85 mm beträgt, während für einen Betrieb der Scheibenwischvorrichtung 100 ein optimaler Abstand zur Motorhaube nur 10 mm beträgt, so kann die axiale Höhe des ersten axialen Abschnitts 210 des Wischerwellenlagers 110 beispielsweise 75 mm betragen, so dass im Fall eines Aufpralls durch teleskopisches Einschieben des ersten axialen Abschnitts 210 in den zweiten axialen Abschnitt 220 des Wischerwellenlagers 110 die gesamte Bauhöhe der Scheibenwischvorrichtung 100 so weit verringert werden kann, dass der geforderte Abstand der Scheibenwischvorrichtung 100 zur ursprünglichen Position der Motorhaube von 85 mm eingehalten wird.

Figur 3 zeigt einen Längsschnitt durch das Wischerwellenlager 110 der Figuren 1 und 2. Der dargestellte Längsschnitt ist so gewählt, dass die Befestigungslasche 240 und das Befestigungs-Steckelement 250 aus Figur 2 nicht sichtbar sind.

Die untere Lagerbuchse 270 weist an ihrem unteren Ende einen Kragen auf, so dass sie nicht weiter als bis zu diesem Kragen in den zweiten axialen Abschnitt 220 eingeführt werden kann. Bevorzugterweise ist die untere Lagerbuchse 270 durch Press- oder Klemmsitz am zweiten axialen Abschnitt 220 befestigt; alternativ oder zusätzlich kann die untere Lagerbuchse 270 beispielsweise auch eingeklebt, eingelötet oder eingeschrumpft sein. Entsprechendes gilt für die obere Lagerbuchse 260, mit dem Unterschied, dass die obere Lagerbuchse 260 von oben in den ersten axialen Abschnitt 210 eingeführt ist und einen Kragen zur Begrenzung des Einführens an ihrem oberen Ende trägt.

Die obere Lagerbuchse 260 abzüglich des beschriebenen Kragens ist so hoch wie der erste axiale Abschnitt 210. Eine kürzere obere Lagerbuchse 260 weist eine kleinere Verbindungsfläche zum ersten axialen Abschnitt 210 auf und ist somit nicht vorteilhaft; eine längere obere Lagerbuchse 260 hingegen bewirkt keine vergrößerte Verbindungsfläche zum ersten axialen Abschnitt 210 und ist somit in der Regel unnötig.

Die untere Lagerbuchse 270 ist nur so hoch, dass ein verbleibender Raum zwischen dem oberen Ende der unteren Lagerbuchse 270 und dem oberen Ende des zweiten axialen Abschnitts 220 ausreicht, um den zweiten axialen Abschnitt 220 auf dessen voller Länge aufzunehmen.

Im Übergangsabschnitt 230, der den ersten axialen Abschnitt 210 mit dem zweiten axialen Abschnitt 220 verbindet, befindet sich eine Sollbruchstelle 310, die den ersten axialen Abschnitt 210 ringförmig umläuft.

Die obere Lagerbuchse 260 und die untere Lagerbuchse 270 weisen gleiche Innendurchmesser zur Führung der Wischerwelle 140 aus Figur 1 auf. Am oberen Ende der Wischerwelle 140 aus Figur 1 montierte Elemente, beispielsweise ein Wischerarm mit Wischerblatt, verhindern aufgrund ihrer radialen Ausdehnung eine Verschiebung der Wischerwelle 140 in der oberen Lagerbuchse 260 nach unten. Eine axiale Belastung der Wischerwelle 140 nach unten wird daher auf die obere Lagerbuchse 260 und den ersten axialen Abschnitt 210 übertragen. Die Sollbruchstelle 310 im Übergangsabschnitt 230 löst sich bei Überschreiten ihrer vorbestimmten Bruchkraft und der erste axiale Abschnitt 210 wird teleskopisch in den zweiten axialen Abschnitt 220 eingeschoben. Dabei gleitet die Wischerwelle 140 in der unteren Lagerbuchse 270 nach unten.

Der Außendurchmesser des ersten axialen Abschnitts 210 ist deutlich kleiner als der Innendurchmesser des zweiten axialen Abschnitts 220 gewählt. Der in den zweiten axialen Abschnitt 220 eingeschobene erste axiale Abschnitt 210 weist daher in radialer Richtung eine gewisse Bewegungsfreiheit auf, durch die ein Verklemmen oder Verkeilen des in den zweiten axialen Abschnitt 220 eingeschobenen ersten axialen Abschnitts 210 vermieden werden kann.

Figur 4 zeigt ein Detail des Längsschnitts des Wischerwellenlagers 110 aus Figur 3. In Figur 4 ist insbesondere die Lage der Sollbruchstelle 310 bezüglich des ersten axialen Abschnitts 210, des zweiten axialen Abschnitts 220 und des Übergangsabschnitts 230 des Wischerwellenlagers 110 erkennbar. Der Übergangsabschnitt 230 hat außen zylindrische Form und innen die Form eines Hohlkegels, so dass der sichtbare Querschnitt des Übergangsabschnitts 230 im Wesentlichen die eines Trapezes aufweist. Die untere, kürzere Grundseite des Trapezes grenzt in axialer Richtung des Wischerwellenlagers 110 an den zweiten axialen Abschnitt 220 an. In diesem Bereich haben der Übergangsabschnitt 230 und der zweite axiale Abschnitt 220 gleiche Wandstärken. In einer bevorzugten Ausführungsform ist der Übergangsabschnitt 230 einstückig mit dem zweiten axialen Abschnitt 220 ausgeführt. In alternativen Ausführungsformen kann der Übergangsabschnitt 230 aus dem gleichen oder einem anderen Material wie der zweite axiale Abschnitt 220 bestehen und am zweiten axialen Abschnitt 220 beispielsweise durch Kleben, Löten oder Schweißen befestigt sein.

Im Bereich der oberen, längeren Grundlinie des Trapezes, welches den Querschnitt des Übergangsabschnitts 230 darstellt, grenzt der Übergangsabschnitt 230 in radialer Richtung an den ersten axialen Abschnitt 210 an. Bezüglich Materialpaarung und Verbindung des Übergangsabschnitts 230 mit dem ersten axialen Abschnitt 210 gilt das oben bezüglich des zweiten axialen Abschnitts 220 Gesagte. Insbesondere kann der Übergangsabschnitt 230 Teil des ersten axialen Abschnitts 210 und/oder des zweiten axialen Abschnitts 220 sein.

Die Sollbruchstelle 310 verläuft ringförmig zwischen dem Übergangsabschnitt 230 und dem ersten axialen Abschnitt 210. Übersteigt eine zwischen dem ersten axialen Abschnitt 210 und dem zweiten axialen Abschnitt 220 wirkende Kraft ein Maß, das durch die Ausformung der Sollbruchstelle 310 vorgegeben ist, so wird der erste axiale Abschnitt 210 vom Übergangsabschnitt 230 getrennt und die beiden axialen Abschnitte 210, 220 des Wischerwellenlagers 210 sind gegeneinander axial verschiebbar. Die zur Trennung der Sollbruchstelle 310 erforderliche Bruchkraft kann eine axiale Komponente und gegebenenfalls eine radiale Komponente umfassen. Hat sich die Sollbruchstelle 310 einmal geöffnet, so kann das Wischerwellenlager 110 der Wischerwelle 140 in der Regel keine ausreichende Führung mehr bieten und muss erneuert werden.

Die Sollbruchstelle 310 kann in alternativen Ausführungsformen auch anders ausgebildet sein, insbesondere kann die Sollbruchstelle 310 zwischen dem Übergangsabschnitt 230 und dem zweiten axialen Abschnitt 220 vorgesehen sein. Analog zu der in Figur 4 dargestellten Ausführungsform kann dann die Sollbruchstelle 310 in radialer Richtung zwischen dem Übergangsabschnitt 230 und dem zweiten axialen Abschnitt 220 gebildet sein.

## Patentansprüche

1. Scheibenwischvorrichtung (100) für ein Kraftfahrzeug, wobei die Scheibenwischvorrichtung (100) ein Wischerwellenlager (110) zur Lagerung einer Wischerwelle (140) aufweist, wobei das Wischerwellenlager (110) einen ersten axialen Abschnitt (210) und einen zweiten, kraftschlüssig mit dem ersten verbundenen axialen Abschnitt (220) aufweist, wobei der erste axiale Abschnitt (210) dazu eingerichtet ist, teleskopisch in den zweiten axialen Abschnitt (220) eingeschoben zu werden,
**dadurch gekennzeichnet, dass**
in einem Bereich zwischen dem ersten und dem zweiten axialen Abschnitt (210, 220) ein Übergangsabschnitt (230) mit einer Sollbruchstelle (310) zur Trennung der kraftschlüssigen Verbindung zwischen den beiden axialen Abschnitten (210, 220) bei Überlastung vorgesehen ist.

2. Scheibenwischvorrichtung (100) nach Anspruch 1, **dadurch gekennzeichnet, dass** der erste axiale Abschnitt (210), der zweite axiale Abschnitt (220) und der Übergangsabschnitt (230) stoffschlüssig miteinander verbunden sind.

3. Scheibenwischvorrichtung (100) nach Anspruch 2, **dadurch gekennzeichnet, dass** der erste axiale Abschnitt (210), der zweite axiale Abschnitt (220) und der Übergangsabschnitt (230) einstückig miteinander verbunden sind.

4. Scheibenwischvorrichtung nach einem der vorangehenden Ansprüche, **dadurch gekennzeichnet, dass** der erste axiale Abschnitt (210) kreiszylindrische Form und der zweite axiale Abschnitt (220) hohlzylindrische Form aufweist.

5. Scheibenwischvorrichtung (100) nach einem der vorangehenden Ansprüche, **dadurch gekennzeichnet, dass** ein Außendurchmesser des ersten axialen Abschnitts (210) größer als ein Innendurchmesser des zweiten axialen Abschnitts (220) ist.

6. Scheibenwischvorrichtung (100) nach einem der vorangehenden Ansprüche, **dadurch gekennzeichnet, dass** der zweite axiale Abschnitt (220) ein Befestigungselement (240, 250) zur Befestigung des Wischerwellenlagers (110) aufweist.

7. Scheibenwischvorrichtung (100) nach Anspruch 6, **dadurch gekennzeichnet, dass** das Befestigungselement ein Steckelement (250) zur Verbindung mit einem Platinenrohr (120) der Scheibenwischvorrichtung (100) umfasst.

8. Scheibenwischvorrichtung (100) nach einem der vorangehenden Ansprüche, **dadurch gekennzeichnet, dass** das Wischerwellenlager (110) dazu ausgebildet ist, als Spritzguss-Bauteil hergestellt zu werden.

## Claims

1. Windscreen wiper device (100) for a motor vehicle, wherein the windscreen wiper device (100) has a wiper shaft bearing (110) for the mounting of a wiper shaft (140), wherein the wiper shaft bearing (110) has a first axial section (210) and a second axial section (220) connected to the first axial section in a frictional manner, wherein the first axial section (210) is designed to be pushed telescopically into the second axial section (220), **characterized in that** a transition section (230) having a predetermined breaking point (310) for separating the frictional connection between the two axial sections (210, 220) in the event of overloading is provided in a region between the first and the second axial sections (210, 220).

2. Windscreen wiper device (100) according to Claim 1, **characterized in that** the first axial section (210), the second axial section (220) and the transition section (230) are connected to one another in an integrally bonded manner.

3. Windscreen wiper device (100) according to Claim 2, **characterized in that** the first axial section (210), the second axial section (220) and the transition section (230) are connected integrally to one another.

4. Windscreen wiper device according to one of the preceding claims, **characterized in that** the first axial section (210) has a circular-cylindrical shape and the second axial section (220) has a hollow-cylindrical shape.

5. Windscreen wiper device (100) according to one of the preceding claims, **characterized in that** an outside diameter of the first axial section (210) is larger than an inside diameter of the second axial section (220).

6. Windscreen wiper device (100) according to one of the preceding claims, **characterized in that** the second axial section (220) has a fastening element (240, 250) for the fastening of the wiper shaft bearing (110).

7. Windscreen wiper device (100) according to Claim 6, **characterized in that** the fastening element comprises a plug-in element (250) for connecting to a mounting-plate tube (120) of the windscreen wiper device (100).

8. Windscreen wiper device (100) according to one of the preceding claims, **characterized in that** the wiper shaft bearing (110) is designed to be produced as an injection-moulded component.

## Revendications

1. Dispositif d'essuie-glace (100) pour un véhicule automobile, le dispositif d'essuie-glace (100) présentant un palier d'arbre d'essuie-glace (110) pour supporter un arbre d'essuie-glace (140), le palier d'arbre d'essuie-glace (110) présentant une première portion axiale (210) et une deuxième portion axiale (220) connectée par engagement par force à la première, la première portion axiale (210) étant prévue pour être enfoncée de manière télescopique dans la deuxième portion axiale (220),
**caractérisé en ce que**
dans une région entre la première portion axiale et la deuxième portion axiale (210, 220) est prévue une portion de transition (230) avec un point destiné à la rupture (310) pour la séparation de la connexion par engagement par force entre les deux portions axiales (210, 220) en cas de surcharge.

2. Dispositif d'essuie-glace (100) selon la revendication 1, **caractérisé en ce que** la première portion axiale (210), la deuxième portion axiale (220) et la portion de transition (230) sont connectées les unes aux autres par engagement par liaison de matière.

3. Dispositif d'essuie-glace (100) selon la revendication 2, **caractérisé en ce que** la première portion axiale (210), la deuxième portion axiale (220) et la portion de transition (230) sont connectées d'une seule pièce les unes aux autres.

4. Dispositif d'essuie-glace selon l'une quelconque des revendications précédentes, **caractérisé en ce que** la première portion axiale (210) présente une forme cylindrique circulaire et la deuxième portion axiale (220) présente une forme cylindrique creuse.

5. Dispositif d'essuie-glace (100) selon l'une quelconque des revendications précédentes, **caractérisé en ce qu'**un diamètre extérieur de la première portion axiale (210) est supérieur à un diamètre intérieur de la deuxième portion axiale (220).

6. Dispositif d'essuie-glace (100) selon l'une quelconque des revendications précédentes, **caractérisé en ce que** la deuxième portion axiale (220) présente un élément de fixation (240, 250) pour la fixation du palier d'arbre d'essuie-glace (110).

7. Dispositif d'essuie-glace (100) selon la revendication 6, **caractérisé en ce que** l'élément de fixation comprend un élément d'enfichage (250) pour la connexion à un tube de platine (120) du dispositif d'essuie-glace (100).

8. Dispositif d'essuie-glace (100) selon l'une quelconque des revendications précédentes, **caractérisé en ce que** le palier d'arbre d'essuie-glace (110) est réalisé de manière à être fabriqué sous forme de composant moulé par injection.
